# EUROPEAN PATENT SPECIFICATION

(11) **EP 3 971 279 B1**
(45) Date of publication and mention of the grant of the patent: **19.06.2024**
(21) Application number: 21197904.2
(22) Date of filing: 21.09.2021
(51) Int. Cl.: C12G 1/02, C12H 1/22, C12L 11/00

(54) **TANK FOR USE IN WINEMAKING**
TANK ZUR VERWENDUNG BEI DER WEINHERSTELLUNG
RÉSERVOIR POUR UNE UTILISATION EN VINIFICATION

(30) Priority: 22.09.2020 IT 202000022273
(43) Date of publication of application: 23.03.2022
(73) Proprietor: Defranceschi S.r.l., 40026 Imola (BO) (IT)
(72) Inventor: GUILLEMAIN, Laurent Jean Paul, 48123 RAVENNA (IT)
(74) Representative: Modiano, Micaela Nadia

(56) References cited:
- EP-A1- 1 582 580
- WO-A1-2020/021471
- FR-A- 1 251 999
- FR-A- 1 459 335
- FR-A1- 2 944 043

## Description

The present invention relates to a tank for use in winemaking.

Tanks are known and widely used for winemaking and storage, which are made of metallic material, typically steel.

Normally, the tanks known today have a supporting frame for a vertically-extending cylindrical container defined by a bottom wall, by a top wall and by a cylindrical side wall.

The cylindrical side wall is usually circular, elliptical or polygonal in cross-section, and extends about an axis of extension that during use is vertical.

Sometimes, the shape and the bulk of the cylindrical shell do not make it possible to optimize the distribution of the tanks in the available space, especially when the rooms in which they need to be placed have structural elements such as pillars or columns. FR1251999A discloses a compartmentalised silo with separate tanks for storing wine.

The aim of the present invention is to provide a tank for use in winemaking that is capable of being optimally integrated into the environment and into rooms.

Within this aim, an object of the invention is to make available a tank for use in winemaking that has extremely reduced transverse encumbrances.

Another object of the invention is to devise a tank for use in winemaking that makes it possible to easily access the discharge hatches from the floor, without the need to use ladders or walkways.

Another object of the invention is to provide a tank for use in winemaking that is highly reliable, easy to implement and low-cost.

This aim and these and other objects which will become more apparent hereinafter are achieved by a tank for use in winemaking according to claim 1, optionally provided with one or more of the characteristics of the dependent claims.

Further characteristics and advantages of the invention will become more apparent from the description of some preferred, but not exclusive, embodiments of the tank for use in winemaking according to the invention, which are illustrated for the purposes of non-limiting example in the accompanying drawings wherein:
Figure 1 is a perspective view of a tank according to the invention;
Figure 2 is a view similar to Figure 1 in which a part of the outer cylindrical shell is shown as transparent;
Figure 3 is a view from above of the tank of Figure 1;
Figure 4 is a view similar to that of Figure 1 of a variation of embodiment of the tank useful for understanding the invention;
Figure 5 is a perspective view of a tank according to the invention;
Figure 6 is a view from above of the tank of Figure 5.

With reference to the figures, the tank for use in winemaking according to the invention, generally designated by the reference numeral 1, comprises a supporting frame 2 for a tank body 3.

The tank body 3 is made, as shown in the figures, of metallic material, in particular of stainless steel.

The tank body 3 comprises a bottom wall 4, a top wall 5 and a side wall 6.

According to the present invention, the tank 1 defines at least one passage portion 20 which extends in a vertical direction and is adapted to accommodate, at least partially, a respective structural element 200 of a building.

The structural element 200 comprises, for example, a pillar, a column or a structural element in general arranged inside the room designated to accommodate the tank 1.

The passage portion 20 is defined by a respective adjacent arrangement region 21 provided at the side wall 6 of the tank 1.

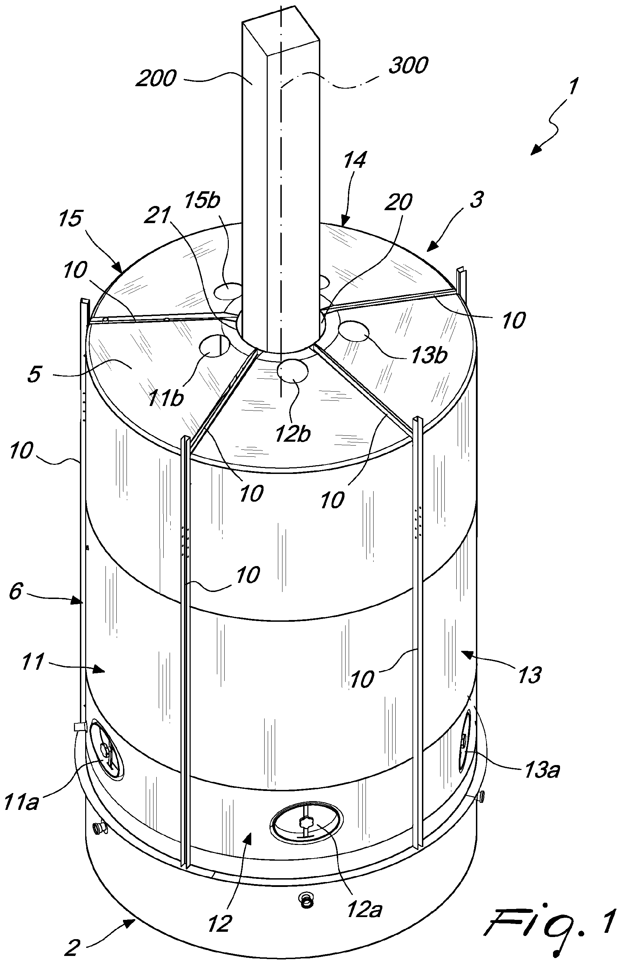

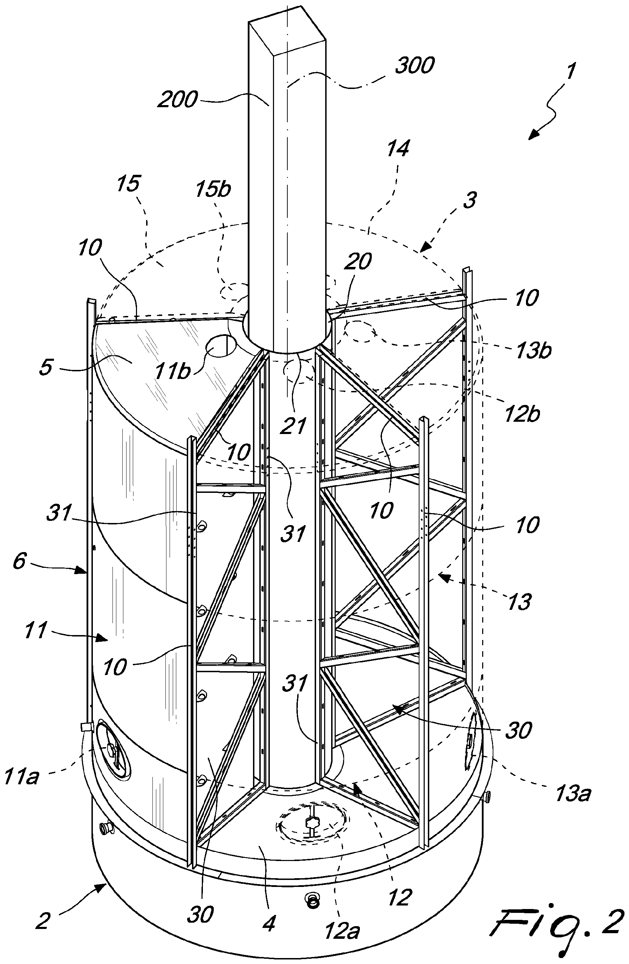

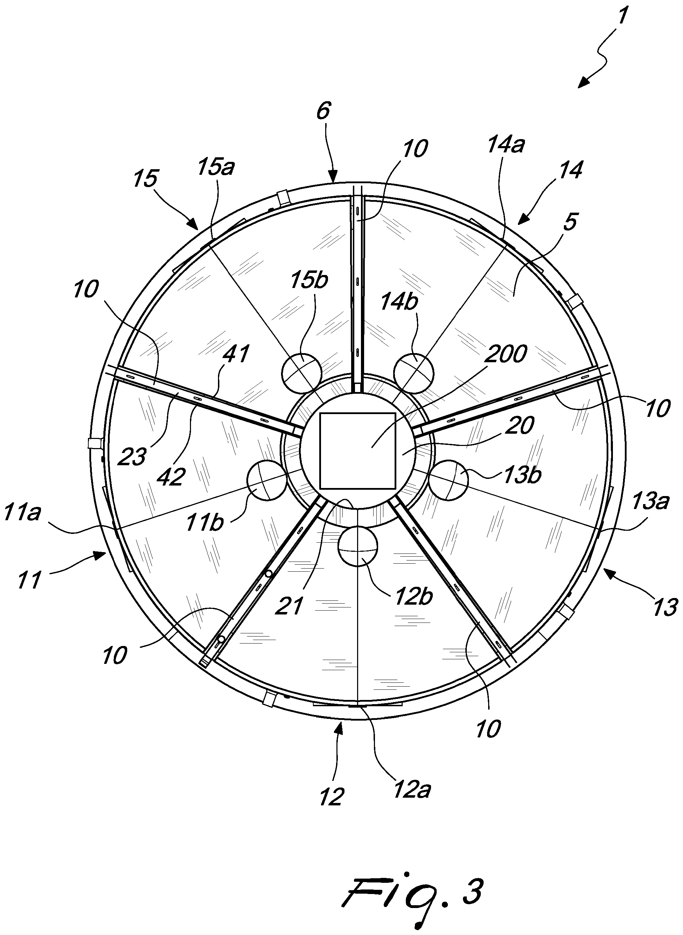

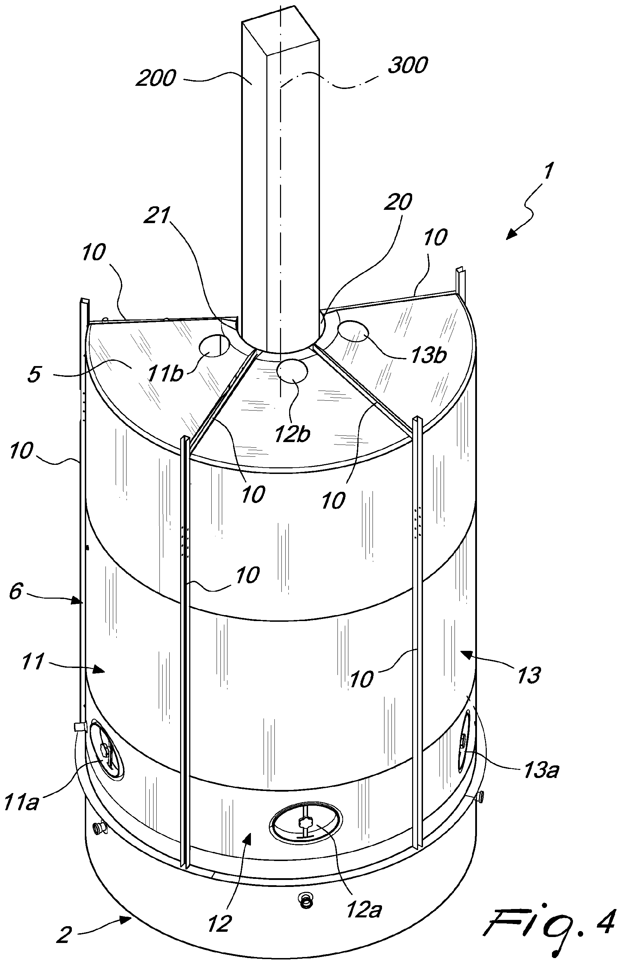

According to the invention, the adjacent arrangement region 21 comprises a closed surface (as in the embodiment shown in Figures 1 to 3), or, in an embodiment that is not encompassed by the wording of the claims, a surface that is open laterally (as in the embodiment of Figure 4).

Preferably, the adjacent arrangement region 21 has a concavity directed toward the respective passage portion 20.

According to the invention, the side wall 6 comprises the adjacent arrangement region 21 which comprises a closed surface defining the passage portion 20 and arranged facing toward the structural element 200, and an outer surface 6a facing away from the adjacent arrangement region 21.

At the outer surface 6a there is at least one access hatch 11a, 12a, while at the top wall there are at least one upper closure hatch and at least one evacuation stack 11b, 12b.

At least one containment cell 11 is defined between the outer surface 6a and the adjacent arrangement region 21.

The passage area extends about a vertical axis for an angle at least equal to 180°.

The passage area extends about a vertical axis for an angle at least equal to 270°.

With reference to a preferred embodiment, the passage area extends about a vertical axis for an angle equal to 360°.

The passage portion 20 has a transverse cross-section that substantially corresponds to, or is larger than, the transverse cross-section of the respective structural element 200 to be accommodated.

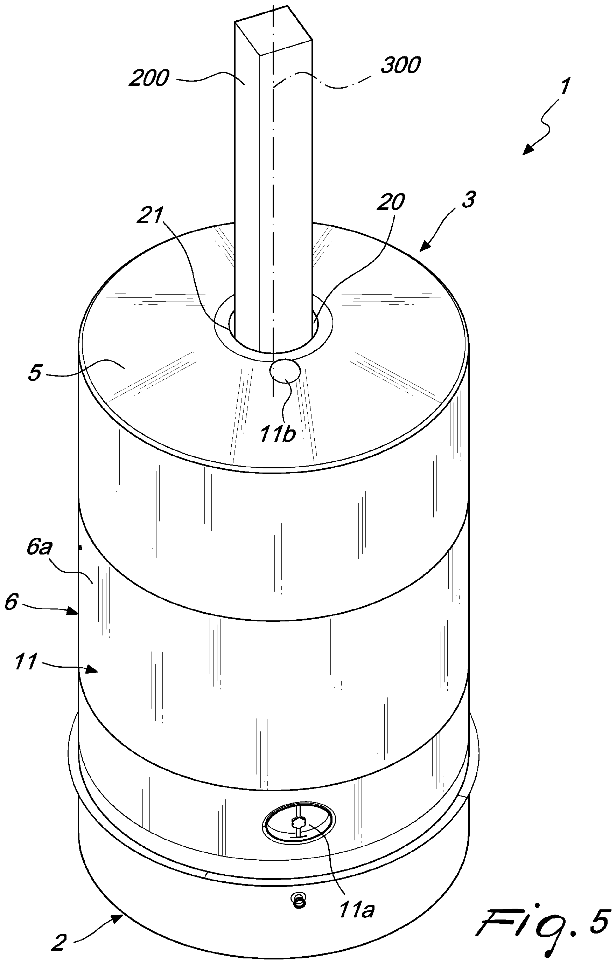

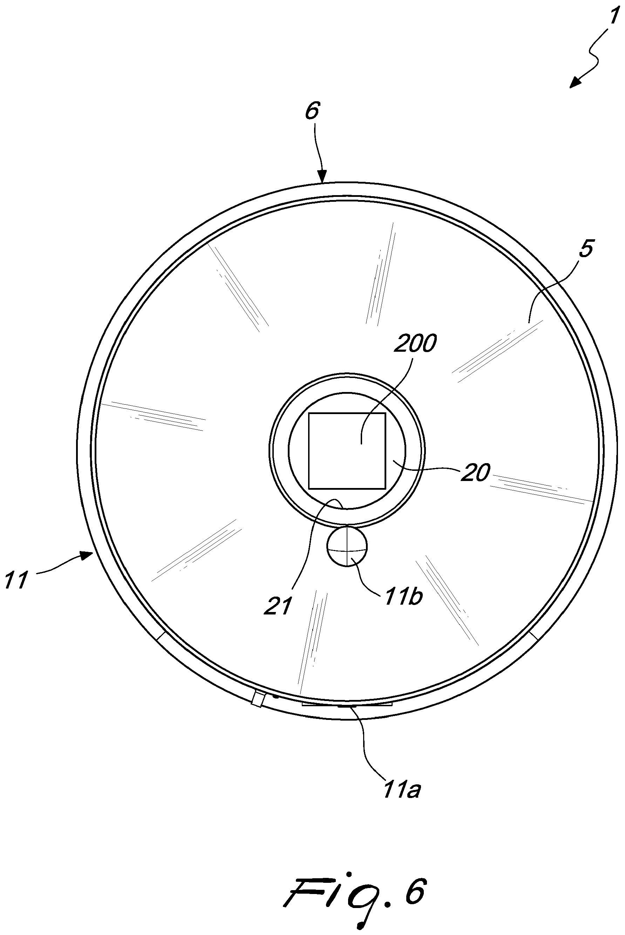

The adjacent arrangement region 21 comprises, as illustrated among other things in Figures 5 and 6, a closed surface that has a substantially constant cylindrical transverse cross-section and extends about the vertical axis 300.

It is possible for at least two containment cells 11, 12, 13, 14, 15, etc. to be defined inside the tank body 3; such containment cells are mutually hermetically separated by at least one separation partition 10.

According to the present invention, the (or each) separation partition 10 extends between the bottom wall 4 and the top wall 5.

At the side wall 6 there are at least one first and at least one second access hatch 11a, 112a etc. which lead into a respective containment cell 11, 12 and are arranged substantially at the same height as the bottom wall 4.

At the top wall 5 there are furthermore at least one first and at least one second evacuation stack 11b, 12b, 13b etc. in communication with a respective containment cell 11, 12.

Conveniently, the separation partition 10 extends on a substantially vertical plane.

Conveniently, the separation partition 10 comprises a first and a second vertical wall 41, 42 which are mutually spaced apart so as to define a separation gap 23 between the respective containment cells 11, 12.

The tank 3 has, advantageously, a supporting structure 30 for the separation partition 10.

In particular, the supporting structure 30 comprises a plurality of vertical posts 31 which are arranged inside the separation gap 23 and are connected, via connecting brackets, to the first and to the second vertical wall 41, 42.

In this manner, each one of the two vertical walls 41, 42 is supported directly by the supporting structure 30 so as to ensure the necessary rigidity even if only one of the containment cells 11, 12 is filled.

There can also be insulation means associated with the separation partition 10.

By way of example, the thermal insulation means can comprise an insulating material arranged inside the separation gap 23.

Conveniently, the insulating material can comprise an expanded polymeric material, for example a polyurethane foam.

Advantageously, the separation partition 10 comprises conditioning means.

In this regard it is possible to use internally hollow vertical posts 31 in order to provide respective heat exchange conduits 31.

With reference to the practical embodiment shown in the figures, the evacuation stacks 11b, 12b are supported by an upper closure hatch which can be associated detachably with a coupling seat supported by the top wall 5.

It is possible for the tank 1 to be associated with a walking surface arranged above the top wall 5 and supported directly by the multiple-cell tank 1.

In this regard, the walking surface can be associated with a discharge duct, which extends preferably at the vertical axis of the multiple-cell tank 1, and is connected to the walking surface by a drain hole.

In a lower region, the discharge duct is connected to one or more discharge tubes.

Use of the tank 1 according to the invention is substantially similar to a conventional tank.

However, by virtue of the presence of the passage portion 20, the tank 1 can be arranged around a structural element 200 such as a pillar or a column, thus making it possible to optimize the available space.

In particular, the solution according to the present invention makes it possible to position the passage portion 20 adjacent to the structural element 200 constituted by a pillar or by a column. The passage portion 20, being completely closed and not containing the access hatch or hatches 11a, 12a, etc. can extend around the outer surface of the structural element 200, without the need to have a gap for access to such passage portion 20.

The access hatch or hatches 11a are in fact arranged or defined at the outer surface 6a.

Having made the tank 1 of metallic material makes it possible to provide it and accommodate it inside rooms and/or cellars in which free space is rather restricted.

The invention, thus conceived, is susceptible of numerous modifications and variations, all of which are within the scope of the appended claims.

This application claims priority from Italian Patent Application No 102020000022273.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A tank (1) for use in winemaking, which comprises a supporting frame (2) for a tank body (3) made of metallic material and comprising a bottom wall (4), a top wall (5) and a side wall (6) which extends in a vertical direction about a vertical axis (300), wherein said tank (1) defines at least one passage portion (20) which extends in a vertical direction about said vertical axis (300), said at least one passage portion (20) being configured for accommodating, at least partially, a respective structural element (200) of a building, said side wall (6) comprising an adjacent arrangement region (21) which comprises a closed surface defining said passage portion (20) and arranged so as to be facing toward said structural element (200), and an outer surface (6a) facing away from said adjacent arrangement region (21), at said outer surface (6a) there being at least one access hatch (11a, 12a), at said top wall there being at least one upper closure hatch and at least one evacuation stack (11b, 12b).

2. The tank (1) according to claim 1, **characterized in that** said metallic material comprises stainless steel.

3. The tank (1) according to claim 1 or 2, **characterized in that** said adjacent arrangement region (21) extends around a vertical axis for an angle equal to 360°.

4. The tank (1) according to one or more of the preceding claims, **characterized in that** said adjacent arrangement region (21) comprises a closed surface that has a substantially constant cylindrical transverse cross-section and extends about said vertical axis (300).

5. The tank (1) according to one or more of the preceding claims, **characterized in that** at least two containment cells (11, 12) are defined inside said tank body (3) and are mutually hermetically separated by at least one separation partition (10) which extends between said bottom wall (4) and said top wall (5), at said side wall (6) there being at least one first and at least one second access hatch (11a, 12a) which lead into a respective containment cell (11, 12) and are arranged substantially at the same height with respect to said bottom wall (4), at said top wall (5) there being at least one first and at least one second evacuation stack (11b, 12b) in communication with a respective containment cell (11, 12).

6. The tank (1) according to claim 5, **characterized in that** said separation partition (10) extends on a substantially vertical plane.

## Patentansprüche

1. Ein Tank (1) zur Verwendung bei der Weinherstellung, der einen Tragrahmen (2) für einen Tankkörper (3) umfasst, der aus Metallmaterial hergestellt ist und eine Bodenwand (4), eine obere Wand (5) und eine Seitenwand (6) umfasst, die sich in einer vertikalen Richtung um eine vertikale Achse (300) erstreckt, wobei der Tank (1) mindestens einen Durchgangsabschnitt (20) bestimmt, welcher sich in einer vertikalen Richtung um die vertikale Achse (300) erstreckt; wobei der mindestens eine Durchgangsabschnitt (20) ausgebildet ist, um zumindest teilweise ein entsprechendes Strukturelement (200) eines Gebäudes aufzunehmen; wobei die Seitenwand (6) einen benachbarten Anordnungsbereich (21) umfasst, welcher eine geschlossene Oberfläche umfasst, die den Durchgangsabschnitt (20) bestimmt und angeordnet ist, um dem Strukturelement (200) zugewandt zu sein, und eine Außenfläche (6a), die von dem benachbarten Anordnungsbereich (21) abgewandt ist; wobei sich an der Außenfläche (6a) mindestens eine Zugangsluke (11a, 12a) befindet; wobei sich in der oberen Wand mindestens eine obere Verschlussluke und mindestens ein Austrittsschacht (11b, 12b) befinden.

2. Der Tank (1) gemäß Anspruch 1, **dadurch gekennzeichnet, dass** das Metallmaterial rostfreien Stahl umfasst.

3. Der Tank (1) gemäß Anspruch 1 oder 2, **dadurch gekennzeichnet, dass** sich der benachbarte Anordnungsbereich (21) in einem Winkel gleich 360° um eine vertikale Achse erstreckt.

4. Der Tank (1) gemäß einem oder mehreren der obigen Ansprüche, **dadurch gekennzeichnet, dass** der benachbarte Anordnungsbereich (21) eine geschlossene Oberfläche umfasst, die einen im Wesentlichen konstanten zylindrischen transversalen Querschnitt hat und sich um die vertikale Achse (300) erstreckt.

5. Der Tank (1) gemäß einem oder mehreren der obigen Ansprüche, **dadurch gekennzeichnet, dass** mindestens zwei Behälterzellen (11, 12) in dem Tankkörper (3) bestimmt und voneinander hermetisch durch mindestens eine Trennwand (10) getrennt sind, die sich zwischen der Bodenwand (4) und der oberen Wand (5) erstreckt, wobei sich an der Seitenwand (6) mindestens eine erste und mindestens eine zweite Zugangsluke (11a, 12a) befinden, die in eine entsprechende Behälterzelle (11, 12) führen und im Wesentlichen auf derselben Höhe mit Bezug auf die Bodenwand (4) angeordnet sind; wobei sich in der oberen Wand (5) mindestens ein erster und mindestens ein zweiter Austrittsschacht (11b, 12b) im Austausch mit einer entsprechenden Behälterzelle (11, 12) befinden.

6. Der Tank (1) gemäß Anspruch 5, **dadurch gekennzeichnet, dass** die Trennwand (10) sich auf einer im Wesentlichen vertikalen Ebene erstreckt.

## Revendications

1. Cuve (1) destinée à être utilisée pour la vinification, qui comprend un châssis de support (2) destiné à un corps de cuve (3) composé d'un matériau métallique et comprenant une paroi inférieure (4), une paroi supérieure (5) et une paroi latérale (6) qui s'étend dans une direction verticale autour d'un axe vertical (300), dans laquelle ladite cuve (1) définit au moins une partie de passage (20) qui s'étend dans une direction verticale autour dudit axe vertical (300), ladite au moins une partie de passage (20) étant configurée pour contenir, au moins partiellement, un élément structurel respectif (200) d'un bâtiment, ladite paroi latérale (6) comprenant une zone d'agencement adjacente (21) qui comprend une surface fermée qui définit ladite partie de passage (20) et prévue de façon à être tournée vers ledit élément structurel (200), et une surface externe (6a) à l'opposé de ladite zone d'agencement adjacente (21), au niveau de ladite surface externe (6a) se trouvant au moins une trappe d'accès (11a, 12a), au niveau de ladite paroi supérieure se trouvant au moins une trappe de fermeture supérieure et au moins un orifice d'évacuation (11b, 12b).

2. Cuve (1) selon la revendication 1, **caractérisée en ce que** ledit matériau métallique comprend de l'acier inoxydable.

3. Cuve (1) selon la revendication 1 ou 2, **caractérisée en ce que** ladite zone d'agencement adjacente (21) s'étend autour d'un axe vertical pour un angle égal à 360°.

4. Cuve (1) selon une ou plusieurs des revendications précédentes, **caractérisée en ce que** ladite zone d'agencement adjacente (21) comprend une surface fermée qui possède une section transversale cylindrique sensiblement constante et s'étend autour dudit axe vertical (300).

5. Cuve (1) selon une ou plusieurs des revendications précédentes, **caractérisée en ce qu'**au moins deux cellules de confinement (11, 12) sont définies à l'intérieur dudit corps de cuve (3) et sont mutuellement séparées de manière hermétique par au moins une séparation (10) qui s'étend entre ladite paroi inférieure (4) et ladite paroi supérieure (5), au niveau de ladite paroi latérale (6) se trouvant au moins une première et au moins une deuxième trappes d'accès (11a, 12a) qui mènent à une cellule de confinement respective (11, 12) et sont prévues sensiblement à la même hauteur par rapport à ladite paroi inférieure (4), au niveau de ladite paroi supérieure (5) se trouvant au moins un premier et au moins un deuxième orifices d'évacuation (11b, 12b) en communication avec une cellule de confinement respective (11, 12).

6. Cuve (1) selon la revendication 5, **caractérisée en ce que** ladite séparation (10) s'étend sur un plan sensiblement vertical.
